# FASCICULE DE BREVET EUROPEEN

(11) **EP 2 210 006 B1**
(45) Date de publication et mention de la délivrance du brevet: **25.07.2012**
(21) Numéro de dépôt: 08841905.6
(22) Date de dépôt: 20.10.2008
(51) Int. Cl.: F16D 1/08, F16D 3/66, F16D 3/77

(54) **MACHINE ELECTRIQUE COMPORTANT UNE LIAISON ELASTIQUE AVEC UN ARBRE PRIMAIRE D'UNE BOITE DE VITESSES**
ELEKTRISCHE MASCHINE MIT EINER ELASTISCHEN VERBINDUNG ZUR HAUPTWELLE EINES GETRIEBES
ELECTRIC MACHINE COMPRISING AN ELASTIC CONNECTION TO A GEARBOX PRIMARY SHAFT

(30) Priorité: 19.10.2007 FR 0758437
(43) Date de publication de la demande: 28.07.2010
(73) Titulaire: Peugeot Citroën Automobiles SA, 78140 Vélizy-Villacoublay (FR)
(72) Inventeur: PAUMIER, Alain, F-Maintenon 28130 (FR); ACKERMANN, Etienne, F- 91300 MASSY (FR)
(86) Numéro de dépôt international: PCT/FR2008/051886
(87) Numéro de publication internationale: WO 2009/053662

(56) Documents cités:
- DE-A1-102006 004 760
- US-A- 2 466 218
- US-A1- 2007 144 280

## Description

La présente invention concerne une machine électrique comportant un rotor apte à être couplé à un arbre primaire d'une boîte de vitesses par une liaison élastique. Cette Machine électrique étant axialement placée entre un embrayage et la boîte de vitesses.

Les boîtes de vitesses à commande manuelle des véhicules automobiles comportent un arbre primaire lié au moteur par un embrayage, et des arbres parallèles liés aux roues motrices du véhicule. L'arbre primaire et les arbres parallèles peuvent être reliés entre eux par des couples de pignons transmettant le mouvement de l'un à l'autre suivant différentes démultiplications, pour réaliser des rapports de transmission.

Un des pignons de chaque couple est solidaire d'un des arbres, l'autre pignon du couple monté libre en rotation sur l'autre arbre, peut être rendu solidaire de son arbre par le coulissement axial d'un manchon de synchronisation. Ce coulissement réalise d'abord une synchronisation des vitesses des deux éléments par un dispositif de synchronisation comportant des cônes de frottement, puis un crabotage du pignon sur l'arbre.

Ces boîtes de vitesses manuelles peuvent être robotisées, en effectuant les mouvements de commande par des actionneurs pilotés par un calculateur.

Un type connu de véhicule hybride présenté notamment dans le document EP-A1-1331126, comporte une machine électrique disposée en aval de l'embrayage d'entrée d'une boîte de vitesses, le rotor étant lié en rotation avec l'arbre primaire de la boîte de vitesses. En permettant une rotation de la machine électrique indépendante du moteur thermique, l'embrayage restant ouvert, cette disposition apporte des avantages. Elle permet notamment de rouler uniquement en traction électrique, ou de récupérer au freinage une énergie plus importante, le moteur thermique restant arrêté et ne freinant pas le véhicule. Cette disposition permet en outre d'apporter une énergie supplémentaire pour aider à la synchronisation de la vitesse des arbres primaire et secondaire de la boîte de vitesses.

Le stator de la machine électrique est fixé sur le carter de la boîte de vitesses, le rotor est centré par des roulements fixés dans un alésage lié au stator, ce qui permet d'assurer une bonne concentricité entre ces deux éléments et d'assurer un entrefer réduit procurant pour la machine électrique des performances élevées.

Ce document décrit de plus une liaison entre le rotor de la machine électrique et l'arbre primaire de la boîte de vitesses, comprenant un amortisseur de torsion à ressorts assurant un entraînement avec une élasticité angulaire pour filtrer des vibrations dans la rotation du moteur thermique. De plus, cet amortisseur de torsion assure un découplage de la liaison entre l'arbre primaire et le rotor, qui peut compenser des défauts d'alignement.

Dans le cas où l'entraînement du rotor est direct, sans amortisseur de torsion, on n'a pas ce découplage. Un inconvénient principal de cette disposition est que entre le rotor de la machine électrique centré par le stator fixé au carter de la boîte de vitesses, et l'arbre primaire de cette boîte de vitesses, on peut constater des défauts géométriques de concentricité, ou de parallélisme des axes qui comportent un écart angulaire, imposant ainsi un effort radial sur la machine électrique et les roulements supportant l'arbre primaire.

Ces défauts peuvent provenir des dispersions de fabrication de pièces, des conditions de montage, ou des déformations générées lors du fonctionnement et dues aux efforts appliqués sur le système.

Ces défauts génèrent lors du fonctionnement des contraintes alternées sur les différentes liaisons, en particulier sur le centrage ou les cannelures d'entraînement de l'arbre primaire de la boîte de vitesses, ce qui peut créer un arrachement de matière du type « fretting corrosion » suite à des micro-déplacements répétés de la liaison cannelée.

Différents dispositifs connus comme un décrit dans US-2466218, tentent d'améliorer cette liaison, mais ils restent généralement compliqués, encombrant et onéreux. La présente invention a notamment pour but d'éviter ces inconvénients de la technique antérieure, et de proposer une liaison entre un rotor de machine électrique et un arbre primaire, qui soit simple et efficace, en utilisant un nombre réduit de pièces.

Elle propose à cet effet une machine électrique conforme à l'objet de la revendication 1.

Un avantage essentiel de cette liaison d'entraînement élastique est qu'elle peut être réalisée de manière simple et économique, mettant en oeuvre peu de composants. Cette liaison élastique, assurée par le joint élastomère comblant le jeu entre le moyeu et le support du rotor, répond ainsi simplement au problème d'écart angulaire entre l'axe de rotation de l'arbre primaire de la boîte de vitesses (en position embrayée ou non) et l'axe de rotation du rotor décrit ci-dessus. Le dimensionnement et le matériau du joint élastomère sont tels que ledit joint assure la transmission de couple entre les deux jeux de dents externes et internes.

La liaison d'entraînement selon l'invention peut en outre comporter une ou plusieurs des caractéristiques suivantes, qui peuvent être combinées entre elles.

Suivant une caractéristique de l'invention, le jeu en suivant le profil des dents est sensiblement constant.

Avantageusement, le moyeu comporte une collerette transversale sensiblement plane, comprenant sur son périmètre extérieur les dents externes d'entraînement.

Les dents externes d'entraînement peuvent s'étendre sur toute l'épaisseur de la collerette, et comporter un contour réalisé suivant une génératrice axiale.

Suivant une autre caractéristique de l'invention, le support du rotor est formé par un procédé d'emboutissage d'une tôle ou de forgeage ou de mécano-soudure ou de moulage.

Le support du rotor peut comporter une forme cylindrique centrale assurant sur sa face extérieure le centrage des roulements, et comprenant sur sa face intérieure les dents internes d'entraînement.

Selon un mode de réalisation, la machine électrique est axialement placée entre un embrayage et une boîte de vitesses.

Le moyeu peut comprendre des perçages axiaux recevant des tiges parallèles à l'axe et coulissantes, de commande de l'embrayage.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente un schéma d'un groupe motopropulseur de véhicule hybride, comportant une machine électrique liée à l'arbre primaire de la boîte de vitesses ;
- la figure 2 présente en coupe axiale suivant l'arbre primaire, une vue partielle d'une boîte de vitesses comportant une machine électrique entraînée par l'arbre primaire ; et
- les figures 3 et 4 présentent en perspective une liaison d'entraînement selon l'invention.

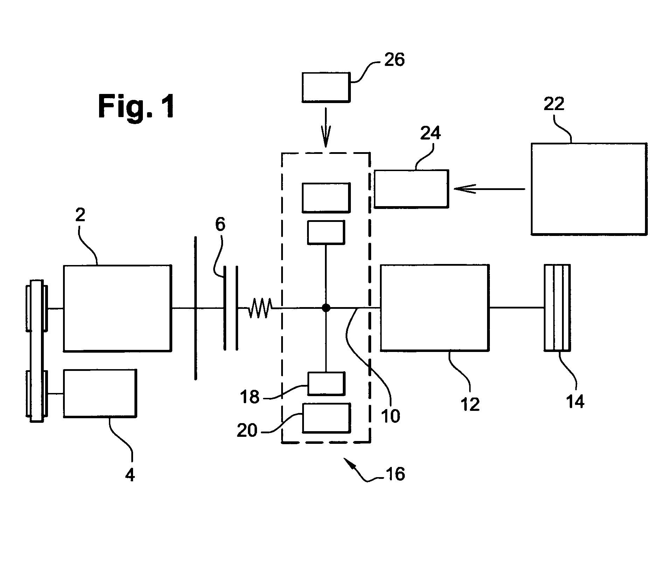

La figure 1 présente le groupe motopropulseur d'un véhicule hybride, comprenant un moteur thermique 2 lié à un alternateur 4, le vilebrequin du moteur thermique entraînant par un embrayage 6 un arbre primaire 10 d'entrée d'une boîte de vitesses 12, transmettant le mouvement aux roues motrices 14 du véhicule suivant différents rapports de démultiplication.

Une machine électrique 16 pouvant fonctionner en moteur ou en génératrice de courant, comporte un rotor 18 lié à l'arbre primaire 10 de la boîte de vitesses 12, et un stator 20 fixé au carter de cette boîte de vitesses. La machine électrique 16 reliée à un accumulateur électrique ou batterie 22 par un onduleur 24, qui sont pilotés par un calculateur 26 qui tient compte de différents paramètres de fonctionnement du véhicule ainsi que de la demande du conducteur, pour fournir un courant électrique de charge de l'accumulateur ou un couple moteur, afin d'optimiser la consommation globale d'énergie du véhicule.

La boîte de vitesses peut être une boîte robotisée, comportant un calculateur électronique qui commande des actionneurs d'embrayage et de passage des vitesses, pour réaliser un fonctionnement entièrement automatisé.

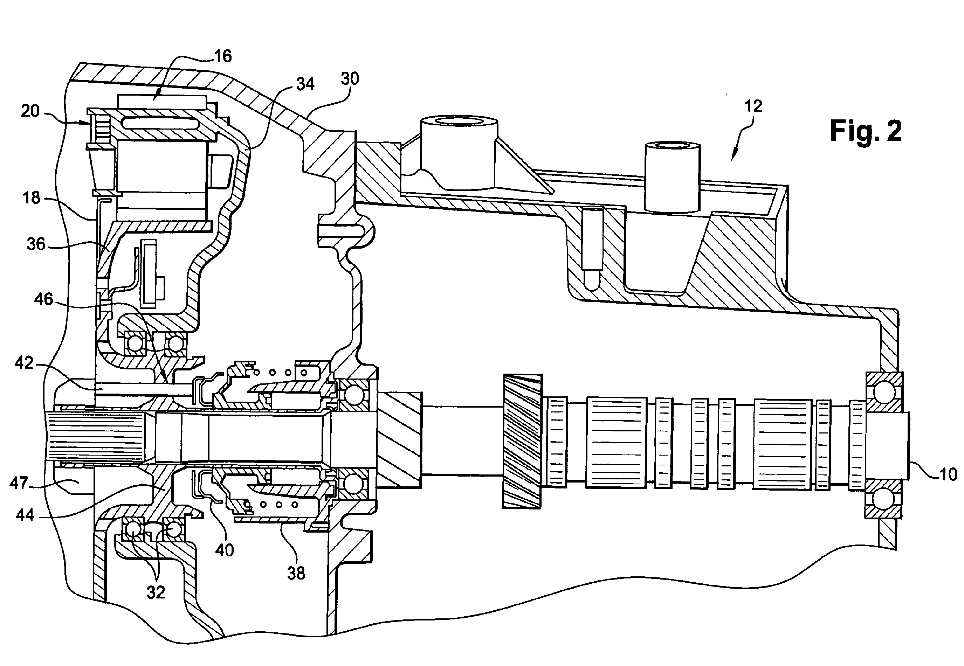

La figure 2 présente une boîte de vitesses 12 dont l'arbre primaire 10 est lié du côté du moteur ou côté avant, à un embrayage non représenté, et du côté arrière par des cannelures à des pignons qui font partie de couples de pignons constituant différents rapports de transmission. Le carter de la boîte de vitesses se complète du côté avant, par un carter d'embrayage 30.

Une machine électrique 16 centrée sur l'arbre primaire 10, et comportant un encombrement axial réduit, est placée dans le carter d'embrayage 30 entre l'embrayage et la boîte de vitesses 12.

Cette machine électrique 16 comporte un stator 20 fixé dans le carter d'embrayage 30, et un rotor 18 lié en rotation à l'arbre primaire 10. Le stator 20 situé radialement à l'extérieur, comporte un support 34 comprenant une partie transversale sensiblement plane, dont le centre forme une partie cylindrique venant radialement au dessus des cages extérieures de deux roulements à billes 32, centrés sur l'arbre primaire 10, pour les supporter.

De la même manière, le rotor 18 comporte un support 36 comprenant une partie transversale sensiblement plane, dont le centre forme une partie cylindrique venant radialement en dessous des roulements à billes 32, pour supporter leurs cages intérieures.

Les roulements 32 assurant de cette manière un centrage direct entre le rotor 18 et le stator 20, on peut disposer un jeu d'entrefer réduit entre ces deux éléments ce qui favorise le rendement de la machine électrique.

Le système de couplage de l'embrayage comporte un dispositif de commande comprenant un vérin hydraulique concentrique 38, situé entre la machine électrique 16 et la boîte de vitesses 12, dont la chemise et le piston coulissant axialement comportent un passage axial recevant l'arbre primaire 10. Le piston du vérin hydraulique 38 transmet son mouvement à l'embrayage 6 par une butée à bille 40 qui presse sur trois tiges parallèles à l'axe et coulissantes axialement 42, également réparties autour de l'arbre primaire 10.

Les tiges coulissantes 42 traversent un moyeu 44 du rotor 18, qui lie en rotation le support 36 du rotor à l'arbre primaire 10, ces tiges coulissant dans des perçages axiaux 46 de ce moyeu, qui les guident. Ensuite, les tiges coulissantes 42 pressent sur une deuxième butée à bille 47, qui est directement en contact avec l'embrayage.

De cette manière, on peut transmettre un mouvement axial du piston du vérin hydraulique 38 qui est fixe, à un embrayage lié en rotation au vilebrequin du moteur thermique, en traversant le moyeu 44 du rotor qui est lié en rotation à l'arbre primaire 10, pouvant tourner à une vitesse différente de l'embrayage.

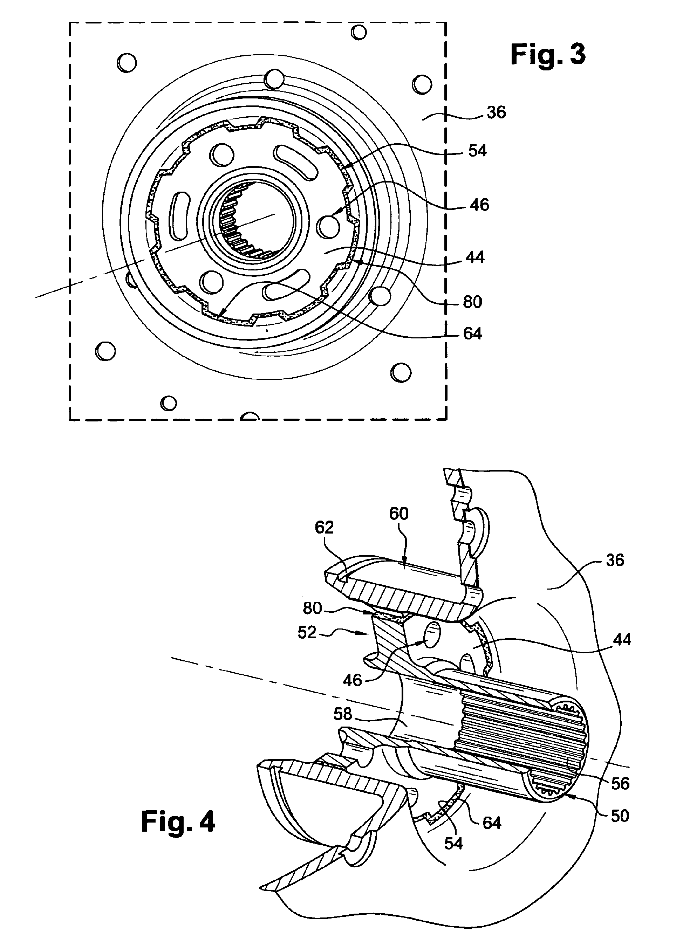

Les figures 3 et 4 détaillent le moyeu 44, ainsi que sa liaison avec le rotor 18. Le moyeu 44 comporte une partie centrale 50 allongée axialement, comprenant des cannelures internes 56 en prise avec des cannelures correspondantes de l'arbre primaire. En bout des cannelures internes 56 et du côté arrière, la partie centrale 50 comporte un alésage 58 qui assure un centrage du moyeu 44 sur une partie cylindrique correspondante de l'arbre primaire 10.

De cette manière, on réalise un guidage rigoureux entre le moyeu 44 et l'arbre primaire 10, et un entraînement en rotation qui permet un coulissement axial.

Le moyeu 44 comporte de plus une collerette transversale plane 52, comprenant les perçages axiaux 46 recevant les tiges coulissantes 42, et sur son périmètre extérieur des dents externes 54 qui s'étendent axialement sur l'épaisseur de la collerette, et dont le contour est réalisé suivant une génératrice axiale.

Le support 36 du rotor 18, reçoit les bagues intérieures des deux roulements 32 sur une forme cylindrique centrale 60 qui s'étend axialement, et les maintient par un jonc ouvert s'emboîtant dans une rainure circulaire extérieure 62 de cette forme cylindrique.

La forme cylindrique centrale 60 comporte des dents internes 64, en prise avec les dents externes 54 formées sur le périmètre extérieur de la collerette transversale plane 52. Un jeu sensiblement constant est prévu le long du contour entre les dents internes et externes pour recevoir un joint en élastomère 80.

Le joint en élastomère 80 est surmoulé dans le jeu des dents, pour lier les deux pièces entre elles d'une manière souple. Ce joint élastomère 80 permet de transmettre un couple du rotor 18 de la machine électrique 16 à l'arbre primaire 10, grâce aux dents qui s'emboîtent, tout en permettant un petit débattement angulaire ainsi qu'un décentrage entre le moyeu 44 guidé par l'arbre primaire 10, et le rotor 36.

La matière pour l'élastomère est choisie pour résister aux contraintes alternées et aux conditions de fonctionnement comme la température, et doit réaliser aussi une bonne adhérence sur les deux pièces à relier.

Le débattement angulaire et le décentrage possibles du moyeu 44, permettent à partir d'un rotor lié au carter d'embrayage 30 par les roulements 32, de compenser des défauts relatifs d'alignement de l'arbre primaire 10 de la boîte de vitesses 12, sans générer d'efforts importants sur les liaisons, notamment sur les roulements 32, les cannelures internes 56 ou l'alésage 58 du moyeu 44, qui sont protégées d'une dégradation prématurée.

Par ailleurs la liaison d'entraînement avec des dents emboîtées (et en particulier la raideur du joint élastomère 80) assure dans un plan transversal, une élasticité angulaire faible entre le rotor 18 et l'arbre primaire 10, ce qui permet de garder une bonne synchronisation de la rotation de ces deux composants et de ne pas perturber les prestations de fonctionnement de la machine électrique.

Cette liaison est simple et économique. Le support 36 du rotor 18 avec sa forme cylindrique centrale 60, peut être facilement réalisé par l'un des procédés suivants : emboutissage d'une tôle, forgeage, mécano-soudure ou de moulage.

Les dents internes 64 ou externes 54 ne nécessitent pas de précision importante pour leur contour, le jeu étant entièrement rempli par l'élastomère. Le moyeu 44 peut être réalisée par exemple en métal fritté par compression de poudre dans un moule, pour obtenir directement de moulage toutes les formes finies.

De plus, la liaison est compacte. En utilisant une seule épaisseur de tôle pour réaliser la forme cylindrique centrale 60 du support du rotor 18, comprenant le centrage des roulements 32 sur une face extérieure, et les dents internes 54 sur la face intérieure, on a un ensemble radialement peu encombrant ce qui permet notamment de réduire le diamètre des roulements 32.

## Revendications

1. Machine électrique comportant un rotor (18) apte à être couplé à un arbre primaire (10) d'une boîte de vitesses (12) comportant un carter, ladite machine électrique (16) comprenant un stator (20) apte à être fixé sur le carter de ladite boîte de vitesses, le stator (20) comportant un palier (32) de centrage dudit rotor (18), **caractérisée en ce que** le rotor (18) comporte un moyeu (44) et un corps (36) :
- le moyeu (44), apte à être lié à l'arbre primaire (10), comprend des dents externes d'entraînement (54), et comporte axialement en bout des cannelures internes (56), un alésage (58) de centrage du moyeu (44) sur l'arbre primaire (10),
- le corps (36) comprenant des dents internes d'entrainement (64) coopérant, avec un jeu, avec les dents d'entraînement (54) du moyeu (44),
- un joint élastomère (80) étant surmoulé dans ce jeu pour définir une liaison élastique ente le moyeu (44) et le corps (36) apte à compenser des défauts relatifs d'alignement radial et angulaire de l'arbre primaire (10) avec le corps (36) du rotor (18).

2. Machine électrique suivant la revendication 1, **caractérisée en ce que** le jeu entre les dents externes d'entrainement (54) et internes d'entrainement (64), en suivant le profil des dents est sensiblement constant.

3. machine électrique suivant les revendications 1 ou 2, **caractérisée en ce que** le moyeu (44) comporte une collerette transversale sensiblement plane (52), comprenant sur son périmètre extérieur les dents externes d'entraînement (54).

4. Machine électrique suivant la revendication 3, **caractérisée en ce que** les dents externes d'entraînement (54) s'étendent sur toute l'épaisseur de la collerette (52), et comportent un contour réalisé suivant une génératrice axiale.

5. Machine électrique suivant l'une quelconque des revendications précédentes, **caractérisée en ce que** le support (36) du rotor (18) est formé par un procédé d'emboutissage d'une tôle ou de forgeage ou .de mécano-soudure ou de moulage.

6. Machine électrique suivant l'une quelconque des revendications précédentes, **caractérisée en ce que** le support (36) du rotor (18) comporte une forme cylindrique centrale (60) assurant sur sa face extérieure le centrage des roulements (32), et comprenant sur sa face intérieure les dents internes d'entraînement (64).

7. Machine électrique suivant l'une quelconque des revendications precédentes, **caractérisée en ce que** la machine électrique (16) est apte à être axialement placée entre un embrayage et la boîte de vitesses (12).

8. Machine électrique suivant la revendication **caractérisée en ce que** le moyeu (44) comprend des perçages axiaux (46) apte à recevoir des tiges parallèles à l'axe et coulissantes (42), de commande de l'embrayage.

## Claims

1. An electric machine comprising a rotor (18) able to be coupled to an input shaft (10) of a gearbox (12) comprising a housing, the said electric machine (16) including a stator (20) able to be fixed on the housing of the said gearbox, the stator (20) comprising a bearing (32) for centering said rotor (18), **characterized in that** the rotor (18) comprises a hub (44) and a body (36):
- the hub (44), able to be connected to the input shaft (10) includes external drive teeth (54) and comprises axially at the end of the internal splines (56) a bore (58) for centering the hub (44) on the output shaft (10),
- the body (36) including internal drive teeth (64) cooperating, with a clearance, with the drive teeth (54) of the hub (44),
- an elastomer seal (80) being overmoulded in this clearance to define an elastic connection between the hub (44) and the body (36) able to compensate for relative faults of radial and angular alignment of the output shaft (10) with the body (36) of the rotor (18).

2. The electric machine according to Claim 1, **characterized in that** the clearance between the external drive teeth (54) and the internal drive teeth (64) is substantially constant along the profile of the teeth.

3. The electric machine according to Claims 1 or 2, **characterized in that** the hub (44) comprises a substantially flat transverse flange (52), including on its external perimeter the external drive teeth (54).

4. The electric machine according to Claim 3, **characterized in that** the external drive teeth (54) extend over the entire thickness of the flange (52), and comprise a contour produced according to an axial generating line.

5. The electric machine according to any one of the preceding claims, **characterized in that** the support (36) of the rotor (18) is formed by a stamping process of a metal sheet or forging or mechanical welding or casting.

6. The electric machine according to any one of the preceding claims, **characterized in that** the support (36) of the rotor (18) comprises a central cylindrical shape (60) ensuring the centering of the bearings (32) on its outer face, and including on its inner face the internal drive teeth (64).

7. The electric machine according to any one of the preceding claims, **characterized in that** the electric machine (16) is able to be axially placed between a clutch and the gearbox (12).

8. The electric machine according to Claim 7, **characterized in that** the hub (44) includes axial drill holes (46) able to receive sliding clutch-operating rods (42) parallel to the axis.

## Patentansprüche

1. Elektrische Maschine, die einen Rotor (18) aufweist, der geeignet ist, um mit einer Hauptwelle (10) eines Schaltgetriebes (12), das ein Gehäuse aufweist, gekoppelt zu werden, wobei die elektrische Maschine (16) einen Stator (20) aufweist, der geeignet ist, um auf dem Gehäuse des Schaltgetriebes befestigt zu werden, wobei der Stator (20) ein Lager (32) zum Zentrieren des Rotors (18) aufweist, **dadurch gekennzeichnet, dass** der Rotor (18) eine Nabe (44) und einen Körper (36) aufweist:
- die Nabe (44), die dazu geeignet ist, mit der Hauptwelle (10) verbunden zu werden, weist externe Antriebszähne (54) auf und weist axial am Ende interne Nuten (56), eine Bohrung (58) zum Zentrieren der Nabe (44) auf der Hauptwelle (10) auf,
- wobei der Körper (36) interne Antriebszähne (64) aufweist, die mit einem Spiel mit den Antriebszähnen (54) der Nabe (44) zusammenwirken,
- wobei eine Elastomerdichtung (80) in diesem Spiel abgeformt ist, um eine elastische Verbindung zwischen der Nabe (44) und dem Körper (36), die in der Lage ist, relative radiale und winkelige Fluchtungsfehler der Hauptwelle (10) zu dem Körper (36) des Rotors (18) auszugleichen, zu definieren.

2. Elektrische Maschine nach Anspruch 1, **dadurch gekennzeichnet, dass** das Spiel zwischen den externen Antriebszähnen (54) und internen Antriebszähnen (64) entlang des Profils der Zähne im Wesentlichen konstant ist.

3. Elektrische Maschine nach Anspruch 1 oder 2, **dadurch gekennzeichnet, dass** die Nabe (44) einen im Wesentlichen flachen Querkragen (52) aufweist, der an seinem äußeren Umfang die externen Antriebszähne (54) aufweist.

4. Elektrische Maschine nach Anspruch 3, **dadurch gekennzeichnet, dass** sich die externen Antriebszähne (54) auf der gesamten Stärke des axialen Kragens (52) erstrecken und eine Kontur aufweisen, die entlang einer axialen Mantellinie ausgeführt ist.

5. Elektrische Maschine nach einem der vorhergehenden Ansprüche, **dadurch gekennzeichnet, dass** der Träger (36) des Rotors (18) durch ein Stanzverfahren eines Blechs oder Schmieden oder maschinelles Schweißen oder Formen ausgebildet wird.

6. Elektrische Maschine nach einem der vorhergehenden Ansprüche, **dadurch gekennzeichnet, dass** der Träger (36) des Rotors (18) eine zentrale zylindrische Form (60) aufweist, die auf ihrer Außenseite das Zentrieren der Lager (32) sicherstellt und auf ihrer Innenseite die internen Antriebszähne (64) aufweist.

7. Elektrische Maschine nach einem der vorhergehenden Ansprüche, **dadurch gekennzeichnet, dass** die elektrische Maschine (16) geeignet ist, um axial zwischen eine Kupplung und das Schaltgetriebe (12) platziert zu werden.

8. Elektrische Maschine nach Anspruch 7, **dadurch gekennzeichnet, dass** die Nabe (44) axiale Bohrungen (46) aufweist, die geeignet sind, um Schäfte, die zu der Achse parallel und gleitend (42) sind, zum Steuern der Kupplung aufzunehmen.
